Europäisches Patentamt

European Patent Office

Office européen des brevets

(11) Veröffentlichungsnummer: **0 256 291 B1**

## (12) EUROPÄISCHE PATENTSCHRIFT

(45) Veröffentlichungstag der Patentschrift: **30.12.92**

(21) Anmeldenummer: **87109819.0**

(22) Anmeldetag: **07.07.87**

(51) Int. Cl.⁵: **H04M 19/02**, H04M 3/22

(54) Schaltungsanordnung zur Trennung von Gleichstrom- und Wechselstromsignalanteilen eines Signalgemisches.

(30) Priorität: **31.07.86 DE 3625872**

(43) Veröffentlichungstag der Anmeldung:
**24.02.88 Patentblatt 88/08**

(45) Bekanntmachung des Hinweises auf die
Patenterteilung:
**30.12.92 Patentblatt 92/53**

(84) Benannte Vertragsstaaten:
**AT BE CH DE FR GB IT LI NL SE**

(56) Entgegenhaltungen:
**EP-A- 0 208 875**
**US-A- 3 564 441**
**US-A- 3 772 477**

**IEEE INTERNATIONAL SOLID-STATE CIR-**
**CUITS CONFERENCE, Band 24, Februar 1981,**
**Seiten 246-247,277, IEEE, New York, US; D.W.**
**AULL et al.: "A 60V IC for a transformerless**
**trunk and subscriber line interface"**

**U. TIETZE et al.:**
**"Halbleiter-Schaltungstechnik", fünfte, über-**
**arbeitete Auflage, 1981, Seiten 404-411,**
**Springer-Verlag, Berlin, DE**

(73) Patentinhaber: **SIEMENS AKTIENGESELL-**
**SCHAFT**
**Wittelsbacherplatz 2**
**W-8000 München 2(DE)**

(72) Erfinder: **Stader, Harald, Dipl.-Ing.**
**Starnbergerstrasse 21**
**W-8000 München 71(DE)**
Erfinder: **Rudolf, Hans-Werner, Dr.rer.nat.**
**Woerthstrasse 13**
**W-8000 München 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schaltungsanordnung zur Trennung von Gleichstrom- und Wechselstromsignalanteilen eines Signalgemisches, die drei Strompfade bildet, auf die sich der das Signalgemisch führende Strompfad verzweigt und von denen der erste einen ohmschen Widerstand zur Abnahme des Gleichstromsignals enthält und die beiden anderen gleichstrommäßig abgeriegelt sind und in einem Fall eine Impedanz, an der das Wechselstromsignal abgenommen wird und im anderen Fall einen invertierenden Verstärker in Form eines über einen ohmschen Widerstand gegengekoppelten Operationsverstärkers enthält, dessen Aus gangssignal dem Spannungsabfall im erstgenannten dieser Wechselstrompfade überlagert wird und derart eingestellt ist, daß es diesen zumindest im interessierenden Frequenzbereich kompensiert, so daß der Verzweigungspunkt der Strompfade für die Wechselstromsignale als virtuelle Erde wirkt. Eine derartige Anordnung ist aus der nicht vorveröffentlichten EP-A-0 208 875 bekannt.

Ein typischer Anwendungsfall einer solchen Schaltungsanordnung gemäß Hauptpatent ist der Einsatz in elektronischen Teilnehmeranschlußschaltungen für den Anschluß von Teilnehmeranschlußleitungen an digitale Zeitmultiplex-Fernsprechvermittlungssysteme, die in verschiedene Hardware-Blöcke unterteilt sind, von denen ein Hochvolt-Leistungsbaustein und ein Niedervolt-Baustein jeweils als integrierter Schaltkreis aufgebaut sind, wogegen ein Schutzelement-Baustein und ein Test-Baustein unter Verwendung diskreter Bauelemente aufgebaut sind.

Bei dieser Konstellation muß ein vom Hochvolt-Leistungs-Baustein kommendes Summensignal, das aus Gleich- und Wechselstromanteilen besteht, in seine Bestandteile getrennt werden, um Steuergrößen zu erhalten, mit deren Hilfe eine gewünschte Speisecharakteristik in Form eines entsprechenden Gleichstromwiderstandes und eine gewünschte Impedanz eingestellt werden können.

Die Kennwerte der Schaltungsanordnung sind dabei so eingestellt, daß die gewünschte Signaltrennung in erster Linie im Sprachband zwischen 300 Hz und 3400 Hz wirksam wird. Die in diesem Zusammenhang angestrebte Trennungswirkung eines RC-Gliedes, dessen Kondensator einen Kapazitätswert von etwa $100\mu F$ aufweist, erfordert einen Rückkopplungswiderstand von etwa 50kOhm, der einen hohen Verstärkungsgrad des Operationsverstärkers mit sich bringt. Im erwähnten Frequenzbereich ist dennoch nicht mit Signalverzerrungen zu rechnen, da die dort auftretenden Wechselstromsignale mit ausreichend kleinen Amplituden auftreten, die Spannungshube in der Größenordnung von 6 bis 7 Volt aufweisen.

Bei dem erwähnten Anwendungsfall treten auf dem das Signalgemisch führenden Strompfad jedoch auch außerhalb des Sprachbandes liegende Wechselstromsignale auf, deren Amplitude so groß ist, daß der Operationsverstärker über seinen Dynamikbereich hinaus ausgesteuert wird. Als solche Wechselstromsignale kommen in erster Linie die Wahlimpulse in Frage, die durch periodisches Öffnen und Schließen des Batteriestromkreises erzeugt werden und demnach mit Amplituden bis zu 60 V auftreten.

Die Aufgabe der Erfindung besteht nun darin, eine Schaltungsanordnung der eingangs genannten Art so weiterauszugestalten, daß in solchen Fällen eine Übersteuerung des Operationsverstärkers dieser Schaltungsanordnung und damit eine Verzerrung von Wechselstromsignalen entsprechend großer Amplituden, insbesondere also der Wahlimpulse vermieden wird.

Erfindungsgemäß wird diese Aufgabe dadurch gelöst, daß dem im Rückkopplungszweig des Operationsverstärkers liegenden ohmschen Widerstand antiparallel geschaltete Dioden mit derartigem Schwellwert parallel geschaltet sind, daß Wechselspannungsanteile mit einer Amnplitude, die zur Übersteuerung des Operationsverstärkers führen würden, begrenzt werden.

Nachstehend wird die Erfindung anhand eines Ausführungsbeispieles unter Bezugnahme auf eine Zeichnung näher erläutert.

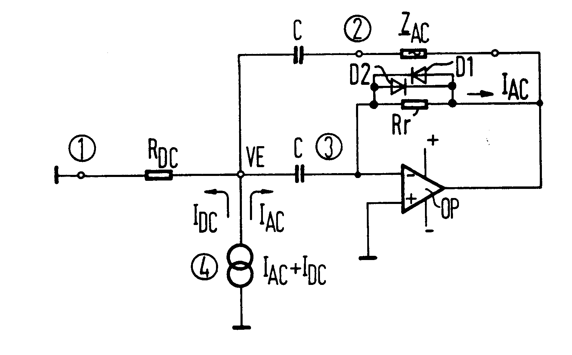

In der Zeichnung ist als Signalquelle, die ein aus Gleichstrom- und Wechselstromanteilen $J_{AC} + J_{DC}$ bestehendes Signalgemisch liefert, eine Konstantstromquelle IK angenommen, die in einem Strompfad (4) liegt. Dieser Strompfad verzweigt sich am Schaltungspunkt VE in Strompfade (1), (2) und (3). Der Strompfad (1) enthält einen ohmschen Widerstand $R_{DC}$, an dem die Gleichspannungsanteile des Gemisches abgenommen werdene sollen. Der Strompfad (2) enthält einen Kondensator C sowie eine Impedanz $Z_{AC}$, an der die Wechselstromanteile des Signalgemisches abgenommen werden sollen, beispielsweise auf nicht dargestellte Art über einen Operationsverstärker.

Der Strompfad (3) enthält ebenfalls einen Kondensator C, der dieselbe Kapazität wie der im Strompfad (4) liegende Kondensator aufweisen kann und einen Operationsverstärker OP, dessen nichtinvertierender Eingang (+) an Erdpotential liegt und dessen invertierender Eingang (-) mit dem dem Schaltungspunkt VE abgewandten Anschluß des Kondensators C in Verbindung steht. Der Ausgang des Operationsverstärkers ist über einen Gegenkopplungswiderstand (Rr) mit dem invertierenden Eingang (-) verbunden.

Der Ausgang des Operationsverstärkers steht außerdem mit dem einen Anschluß der Impedanz $Z_{AC}$ im Strompfad (2) in Verbindung. Insoweit entspricht die dargestellte Schaltungsanordnung der im EP-A-0 208 875 beschriebenen Schaltungsanordnung.

Erfindungsgemäß sind nun dem Gegenkopplungswiderstand Rr antiparallel geschaltete Dioden D1 und D2 parallel geschaltet, deren Schwellwert so gewählt ist, daß Wechselspannungsanteile mit einer Amplitude, die zur Übersteuerung des Operationsverstärker OP führen würde, insbesondere also die erwähnten Wahlimpulse, begrenzt werden.

Durch entsprechende Einstellung des Verstärkungsgrades des Operationsverstärkers OP ist erreicht, daß der Spannungsabfall über den Schaltelementen des Strompfades (2), also der Kondensator C und die Impedanz ZAC, durch den Spannungshub am Ausgang des Operationsverstärkers OP gerade kompensiert wird. Hierdurch entsteht, da auf den beiden Strompfaden (2) und (3) nur Wechselströme fließen können, für Wechselstromsignale, deren Amplitude den genannten Schwellwert der Dioden D1 und D2 nicht übersteigen, am Schaltungspunkt VE ein virtuelles Erpotential. Dies bedeutet für ein Signalgemisch im Bereich des Sprachsignalbandes eine Trennung von Wechselspannungs- und Gleichspannungsanteilen.

## Patentansprüche

1. Schaltungsanordnung zur Trennung von Gleichstrom- und Wechselstromsignalanteilen eines Signalgemisches, **dadurch gekennzeichnet,** daß sie drei Strompfade bildet, auf die sich der das Signalgemisch führende Strompfad verzweigt und von denen der erste einen ohmschen Widerstand ($R_{DC}$) zur Abnahme des Gleichstromsignales enthält und die beiden anderen gleichstrommäßig abgeriegelt sind und in einem Fall eine Impedanz ($Z_{AC}$), an der das Welchselstromsignal abgenommen wird und im anderen Fall einen invertierenden Verstärker (OP) in Form eines über einen ohmschen Widerstand (Rr) gegengekoppelten Operationsverstärker enthält, dessen Ausgangssignal dem Spannungsabfall im erstgenannten dieser Wechselstrompfade überlagert wird und derart eingestellt ist, daß es diesen zumindest im interessierenden Frequenzbereich kompensiert, so daß der Verzweigungspunkt (VE) der Strompfade für die Wechselstromsignale als virtuelle Erde wirkt, und daß dem im Rückkopplungszweig des Operationsverstärkers (OP) liegenden Ohmschen Gegenkopplungswiderstand (Rr) antiparallel geschaltete Dioden (D1, D2) mit einem derartigen Schwellwert parallel geschaltet sind, daß Wechselspannungsanteile mit einer Amplitude, die zur Übersteuerung des Operationsverstärkers führen würden, begrenzt werden.

## Claims

1. Circuit arrangement for the separation of direct current and alternating current components of a composite signal, characterised in that it forms three current paths into which the current path carrying the composite signal branches, the first one of which contains an ohmic resistor ($R_{DC}$) for picking up the direct current signal, and the two others of which are blocked off with respect to direct current, and contains in one case an impedance ($Z_{AC}$) in which the alternating current signal is picked up and in the other case an inverting amplifier (OP) in the form of an operational amplifier negatively fed back via an ohmic resistor (Rr), the output signal of which operational amplifier is overlaid on the voltage drop in the first-mentioned of said alternating current paths and is set in such a way that it compensates the latter, at least in the frequency range of interest, so that the branching point (VE) of the current paths acts as a virtual earth for the alternating current signals, and in that connected in parallel with the ohmic negative-feedback resistor (Rr) situated in the feedback branch of the operational amplifier (OP) are antiparallel-connected diodes (D1, D2) with a threshold value such that alternating voltage components having an amplitude that would lead to overdriving of the operational amplifier are limited.

## Revendications

1. Montage pour la séparation de composantes de signaux à courant continu et à courant alternatif d'un mélange de signaux, caractérisé par le fait qu'il forme trois voies de courant, en lesquelles se partage la voie de courant amenant le mélange de signaux et parmi lesquelles la première voie de courant contient une résistance ohmique ($R_{DC}$) servant à prélever le signal de courant continu, et les deux autres voies de courant sont verrouillées pour le courant continu et contient dans un cas une impédance ($Z_{AC}$), sur laquelle est prélevé le signal à courant alternatif, et dans l'autre cas un amplificateur inverseur (OP) se présentant sous la forme d'un amplificateur opérationnel qui est couplé par contre-réaction et par l'intermédiaire d'une résistance ohmique (Rr) et dont le signal de sortie est superposé à la chute de tension dans la première indiquée de ces voies à courant alternatif et est réglé de telle sorte qu'il compense cette chute de tension au moins dans la gamme de fréquences, à laquelle on s'intéresse, de sorte que le point d'embranchement (VE) des voies de courant pour les signaux à courant alternatif agit en tant que terre virtuelle, et qu'en parallèle avec la résistance ohmique de contre-réaction (Rr) située dans la branche de réaction de l'amplificateur opérationnel (OP) sont branchées des diodes (D1,D2) qui sont branchées selon un montage antiparallèle et possèdent une valeur de seuil telle que les composantes de la tension alternative possédant une amplitude qui conduirait à la surmodulation de l'amplificateur opérationnel, sont limitées.